# EUROPÄISCHE PATENTSCHRIFT

(11) **EP 1 048 389 B1**
(45) Veröffentlichungstag und Bekanntmachung des Hinweises auf die Patenterteilung: **16.02.2005**
(21) Anmeldenummer: 00107540.7
(22) Anmeldetag: 07.04.2000
(51) Int. Cl.: B23K 20/12, B23K 20/26, B23K 20/24, B23K 37/06, F16P 1/06

(54) **Abdeckung für eine Bauteiloberfläche**
Cover used for the upper surface of a workpiece
Protection pour la surface d'une pièce

(30) Priorität: 27.04.1999 DE 19919054
(43) Veröffentlichungstag der Anmeldung: 02.11.2000
(73) Patentinhaber: MTU Aero Engines GmbH, 80995 München (DE)
(72) Erfinder: Kupetz, Bernd, Dr., 30853 Langenhagen (DE); Meitinger, Anton, 86577 Sielenbach (DE)
(74) Vertreter: Einsele, Rolf W.

(56) Entgegenhaltungen:
- DE-A- 3 012 245
- DE-A- 4 222 188

## Beschreibung

Die Erfindung betrifft eine Abdeckung für eine Bauteiloberfläche als Schutz gegen heiße Metallspritzer, gemäß dem Oberbegriff des Patentanspruches 1.

Abdeckungen für Bauteiloberflächen, welche hauptsächlich als Schutz bei spritzererzeugenden Schweißarbeiten angewendet werden, sind bekannt. Die Varianten reichen hier von provisorischen Lösungen für Einzelfertigung und Kleinserien, z.B. in Form von mit Alu-Klebeband fixierten Alufolien, bis hin zu aufwendigen Lösungen für größere Serien, beispielsweise in Form von komplexen Gebilden aus Stahl, welche mit den zu schützenden Bauteilen verschraubt werden.
Es ist häufig der Fall, dass Bauteile in der Nähe von noch zu fertigenden Schweißverbindungen bereits fein- bzw. fertigbearbeitete Oberflächen aufweisen. Treffen Schweißspritzer auf solche Oberflächen, so können erstere das Bauteil anschmelzen und bleiben fest daran haften. Die Entfernung solcher erkalteter Spritzer kann sehr aufwendig sein und beispielsweise ein Abdrehen, -fräsen oder -schleifen erfordern. Oft bleiben Kerben, Ränder, Erhebungen etc. zurück, welche das Bauteil zumindest optisch/ästhetisch negativ beeinflussen. Schlimmer sind die möglichen metallurgischen Auswirkungen. Die starke lokale Wärmezufuhr durch einen Schweißspritzer mit hoher Temperatur und beachtlicher Masse kann zu Gefügeveränderungen mit negativen Folgen für die Festigkeit/ Dauerfestigkeit führen, wie z.B. Kornvergröberung, Versprödung, Härtung, Enthärtung, Schrumpfung, Lunker- und Rissbildung usw. auf örtlich eng begrenztem Raum. Derartige Fehlstellen können durch Risserzeugung und -wachstum letztlich zum Versagen des Bauteils durch Verformung bzw. Bruch führen. Oberflächenbeschichtungen jeglicher Art können durch Schweißspritzer - ebenfalls lokal geschädigt bzw. zerstört werden. Insofern ist die Erfordernis einer Abdeckung, welche den Kontakt zwischen Schweißspritzern und Bauteiloberflächen sicher verhindert, in vielen Fällen gegeben.
Der Energiegehalt von Schweißspritzern, abhängig von Masse, Temperatur und Geschwindigkeit, ist je nach Schweißverfahren sehr unterschiedlich, wobei das Rotations-Reibschweißen durch seine Kinematik und Energiedichte sicherlich besonders kritische Spritzer erzeugt.

Heiße Metallspritzer entstehen aber nicht nur beim Schweißen. Dort, wo in der Fertigung lokal schmelzflüssiger Bauteilwerkstoff mit hoher, nicht immer genau kontrollierbarer Energiezufuhr erzeugt wird, kann es zu unkontrollierter Freisetzung von Metallspritzern kommen, welche in schmelzflüssigem oder glühendem Zustand mit beachtlicher Geschwindigkeit auf die Oberflächen von Bauteilen und Vorrichtungen treffen können. Beispiele für diesbezügliche Bearbeitungsverfahren sind das autogene Brennschneiden sowie das Bearbeiten mit energiereichen Laserquellen zum Zweck des Schneidens, Bohrens und Abtragens. Auch rotierende Schleif- und Trennscheiben können bei sehr hohem Materialabtrag kritische Metallspritzer erzeugen. All dies bestätigt die Erfordernis schützender Abdeckungen für Bauteiloberflächen.

Die DE 30 12 245 betrifft eine hitzebeständige Schutzabdeckung zum Schutz vor Spritzern aus heißen Feststoffen und/oder Flüssigkeiten. Diese umfasst einen flexiblen, hitzefesten Träger, eine Beschichtung aus einem Organopolysiloxanelastomer und ein in den Elastomer eingelagertes, anorganisches, stückiges und cellulares Füllmaterial. Der flexible Träger basiert auf hitzefesten Fasern, wie Asbest-, Kohle-, Glas- oder Siliziumdioxidfasern. Der Träger kann die Form eines Gewebes oder einer Bahn aus willkürlich angeordneten Fasern haben, die durch die Gegenwart des Elastomerüberzugs zusammengehalten werden. Der Träger kann auch eine gesteppte Struktur darstellen, bei der eine Decke/Lage aus willkürlich angeordneten Fasern zwischen zwei Bahnen aus gewobenen Fasern gehalten ist. Die unmittelbar auf dem zu schützenden Bauteil aufliegende Faserstruktur des Trägers besitzt keine haftenden bzw. klebenden Eigenschaften, so dass ihre Befestigung besonders auf bewegten, z.B. rotierenden Bauteilen aufwändig ist. Der Aufbau der Schutzabdeckung aus mindestens drei verschiedenen Materialien/Strukturen ist aufwändig und teuer. Die Flexibilität der Schutzabdeckung ist begrenzt, so dass sie an räumlich stark konturierten bzw. strukturierten Oberflächen nicht vollflächig anliegen kann.

Angesichts dieser Situation besteht die Aufgabe der Erfindung darin, eine Abdeckung für eine Bauteiloberfläche als Schutz gegen heiße Metallspritzer zu schaffen, die einfach, preiswert und reproduzierbar in ihrer Herstellung, zuverlässig und unproblematisch in ihrer Handhabung, für einen Einsatz an bewegten, insbesondere rotierenden Bauteilen geeignet sowie ausreichend robust und langlebig ist.

Diese Aufgabe wird durch die in Anspruch 1 gekennzeichneten Merkmale a) bis c) gelöst, in Verbindung mit den gattungsbildenden Merkmalen in dessen Oberbegriff. Werkstoffseitig besteht die Abdeckung aus einem gummielastischen Werkstoff mit ausreichender Temperaturbeständigkeit, welcher durch Adhäsion an der Bauteiloberfläche haftet. Falls die "Klebrigkeit" des Abdeckungswerkstoffes nicht ausreicht, was besonders bei dynamischer Beanspruchung durch Fliehkräfte/ Trägheitskräfte der Fall sein kann, kann zusätzlich ein geeigneter Klebstoff zugegeben werden. Wichtig ist, dass die Abdeckung vom Bauteil wieder problemlos entfernbar ist, möglichst ohne sie dabei zu zerstören.
Die Haftung wird dadurch verbessert bzw. erst ermöglicht, dass die bauteilzugewandte Oberflächengeometrie der Abdeckung genau an die Bauteiloberfläche angepasst, d.h. zu dieser komplementär ist. Dabei wird vorausgesetzt, dass die Bauteiloberfläche auch glatt ist, z.B. infolge einer Feinbearbeitung.
Die Abdeckung ist als mehrmals verwendbares, eigenstabiles Integralteil ausgeführt, wodurch Zeit und Kosten eingespart werden und auch Umweltaspekte berücksichtigt werden.

In den Unteransprüchen sind bevorzugte Ausgestaltungen der Abdeckung nach dem Hauptanspruch gekennzeichnet.

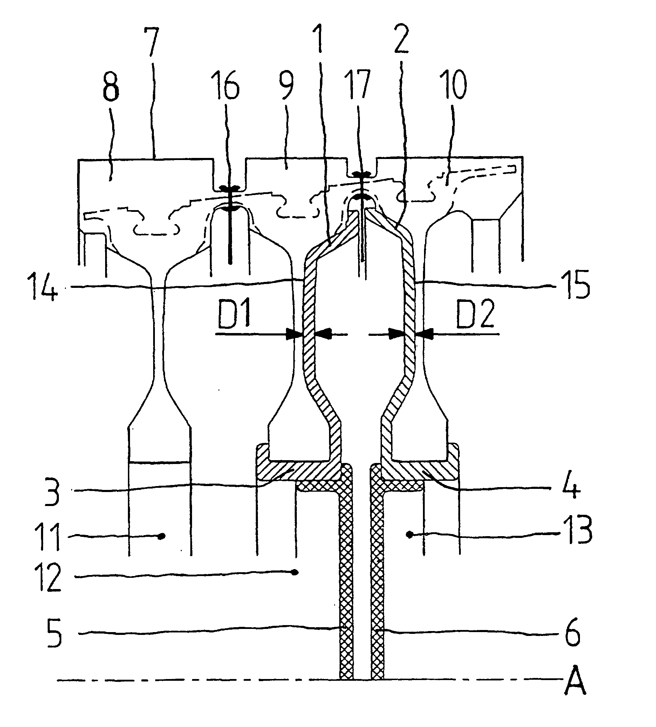

Die Erfindung wird anschließend anhand der Zeichnung noch näher erläutert. Diese zeigt einen Längs- Halbschnitt durch einen Gasturbinenrotor aus drei scheibenartigen, reibgeschweißten Bauteilen mit zwei Abdeckungen gegen Metallspritzer.
Der abgebildete Gasturbinenrotor 7 ist aus drei scheibenartigen, koaxialen, axial hintereinander angeordneten Bauteilen 8, 9, 10 durch Rotations-Reibschweißen integral zusammengesetzt, wobei aus Symmetriegründen nur der Bereich oberhalb seiner Achse A wiedergegeben ist. Der Gasturbinenrotor 7 befindet sich in einem halbfertigen" Zustand, d.h. er weist noch mehrere Aufmaßbereiche auf, welche später abgetragen werden. Dort, wo die Endkontur deutlich von der Istkontur abweicht, ist die Endkontur mit gestrichelten Linien separat wiedergegeben. Dies ist im Bereich der späteren Schaufelbefestigung der Fall, d.h. im Bereich der radial äußeren - hier oberen - Aufdickungen der Bauteile 8, 9, 10. Die Schweißzonen 16, 17 zeigen den Zustand nach dem Fügen, wobei ausgetretenes, überschüssiges Material (Flash") geschwärzt dargestellt ist. Beim Rotations-Reibschweißen wird hohe kinetische Rotationsenergie durch Reibung innerhalb kurzer Zeit in Wärmeenergie umgewandelt, wodurch der Werkstoff in der Schweißzone in einen zähflüssigen Schmelzzustand übergeführt wird und zum Teil wulst- bzw. hakenförmig aus der Schweißzone austritt. Dieser Schweißvorgang - welcher metallurgisch eher einem Schmiedevorgang entspricht - ist mit einer sehr starken Umwandlung/Umformung von Energie und Material verbunden, wobei in aller Regel hochenergetische Metallspritzer freigesetzt werden, welche mit beachtlicher Geschwindigkeit, d.h. kinetischer Energie, auf benachbarte Bauteiloberflächen treffen und diese beschädigen können.
Die Figur zeigt die Fertigungssituation, welche sich aus der Herstellung der Fügeverbindung in der Schweißzone 17 (zwischen den Bauteilen 9 und 10) ergibt. Die unmittelbar spritzergefährdeten Bauteiloberflächen 14,15 sind mit erfindungsgemäßen Abdeckungen 1,2 versehen, welche bis nahe an die Schweißzone 17 reichen. Ein gewisser Mindestabstand zum Heißbereich stellt sicher, dass die Abdeckungsränder dort nicht schmelzen bzw. verbrennen. Die Abdeckungen 1,2 sind geometrisch exakt an die Bauteiloberflächen 14,15 angepaßt und haften an letzteren durch Adhäsion. Da die Durchschlagsfestigkeit" der Abdeckungen 1,2 an jeder Stelle gleich hoch sein sollte, ist es sinnvoll, diese mit zumindest ungefähr konstanter und gleicher Di k-ke D 1, D 2 auszuführen (D 1 = D 2 = const.). Da zumindest eine der Abdeckungen 1,2 beim Reibschweißen mit dem zugehörigen Bauteil rotiert, sind beide in spezieller Weise gegen Zentrifugalbelastungen abgestützt. Alle Bauteile 8,9,10 besitzen mittige Öffnungen 11,12,13, welche in vorteilhafter Weise zur Abstützung benutzbar sind. Hierzu weisen die Abdeckungen 1,2 nabenartige Bereiche 3,4 auf, welche die Öffnungen 12,13 formschlüssig durchgreifen und sich dabei allseitig "festhaken". Zur Versteifung sind die Bereiche 3,4 gegenüber den eigentlichen Spritzschutzbereichen aufgedickt. Da nicht auszuschließen ist, daß Metallspritzer durch die Öffnungen der Bereiche 3,4 mit pingpongartigen Richtungsänderungen in axial benachbarte Bauteilzonen gelangen, sind die Öffnungen 12,13 mit formsteifen Deckeln 5,6 verschlossen, welche in die nabenartigen, elastischen Bereiche 3,4 eingepreßt bzw. eingerastet sind (Kraft- bzw. Formschluß, nicht im Detail dargestellt). Ein preiswertes und leic h-tes Material für die Deckel 5,6 ist beispielsweise geschäumter Hartkunststoff.
Das bevorzugte Material für die Abdeckungen 1,2 ist Silikonkautschuk, da dieses die Eigenschaften "Dauerelastitzität", "Oberflächenadhäsion" und Temperaturbeständigkeit" in optimaler Weise vereinigt. Es werden solche Silikontypen ausgewählt, die keine fluidischen Bestandteile, z.B. in Form von Öl, absondern um eine Kontamination" der Bauteiloberflächen zu vermeiden, z.B. im Hinblick auf eine nachfolgende Rißprüfung. In extremen Belastungsfällen kann zusätzlicher Kle b-stoff aufgetragen werden, welcher selbst ebenfalls möglichst rückstandsfrei vom Bauteil entfernbar sein sollte.
Die Herstellung der Abdeckungen erfolgt zweckmäßig auf einem Formteil ("Dummy"), welches geometrisch mit der entsprechenden Bauteiloberfläche bestmöglich übereinstimmt. Günstig ist ein Ausschuß-Bauteil ohne relevante Maßabwe i-chungen im fraglichen Bereich.
Die gewünschte Abdeckungsdicke wird mittels eines rückseitigen Formteils (Maske") erreicht, welches in definiertem Abstand zum Dummy" fixiert wird. In der Praxis wird pastöse Silikonmasse mit Überschußvolumen auf den Dummy" aufgetragen, und die Maske auf der Gegenseite angedrückt, wobei Überschußmaterial am Umfang austritt. In diesem Zustand läßt man den Kautschuk aushärten und schne i-det den überstehenden Rand anschließend ab. Für ein problemloses Ausformen ist es erforderlich, Dummy" und Maske" mit einem Trennmittel zu beschichten, z.B. auf Teflonbasis.
Die gummielastischen Eigenschaften machen Formschlußvarianten mit Umgriff, Hinterschneidungen etc. möglich, welche mit einteiligen, starren Abdeckungen nicht realisierbar sind. Generell wird das Aufbringen und Abnehmen der Abdeckungen durch die Elastizität sehr erleichtert.

## Patentansprüche

1. Abdeckung (1, 2) für eine Bauteiloberfläche als Schutz gegen heiße Metallspritzer bei der Bearbeitung des Bauteils (9, 10) selbst oder eines benachbarten Bauteils unter lokaler Erzeugung von schmelzflüssigem Werkstoff, insbesondere beim Rotations-Reibschweißen von Gasturbinenbauteilen, zur Vermeidung eines metallischen Kontaktes von Metallspritzem mit dem Bauteil sowie einer kritischen lokalen Wärmezufuhr in das Bauteil, wobei die Dicke (D1, D2) der Abdeckung an den Energiegehalt einschließlich der kinetischen Energie der zu erwartenden energiereichsten Metallspritzer angepasst ist und daher an jeder Stelle der zu schützenden Bauteiloberfläche ein definiertes Mindestmaß nicht unterschreitet, **dadurch gekennzeichnet, dass**
a) der Werkstoff für die Abdeckung (1,2) ein gummielastischer, unter Adhäsion/Klebung am Bauteil (9,10) fixierbarer sowie von diesem wieder lösbarer Kunststoff mit ausreichend hoher Temperaturbeständigkeit ist,
b) die bauteilzugewandte Oberflächengeometrie der Abdeckung (1,2) genau komplementär zur Geometrie der Bauteiloberfläche (14,15) ist, und
c) die Abdeckung (1,2) als mehrmals verwendbares, eigenstabiles Integralteil ausgeführt ist.

2. Abdeckung nach Anspruch 1, **dadurch gekennzeichnet, dass** sie (1,2) aus einem Silikonkautschuk besteht, der praktisch keine die Bauteiloberfläche (14,15) beeinflussenden, fluidischen Bestandteile freisetzt.

3. Abdeckung nach Anspruch 1 oder 2, **dadurch gekennzeichnet, dass** ihre Dicke (D 1 ,D 2) an jeder Stelle der zu schützenden Bauteiloberfläche (14,15) zumindest ungefähr gleich ist.

4. Abdeckung nach einem der Ansprüche 1 bis 3, zur Verwendung bei der Herstellung von Gasturbinenrotoren durch Rotations-Reibschweißen unter Verbindung scheibenartiger, koaxial hintereinanderliegender Bauteile mit mittigen Öffnungen, **dadurch gekennzeichnet dass** sie (1,2) einen nabenartigen, die Öffnungen (12,13) des Bauteils (9,10) formschlüssig durchgreifenden Bereich (3,4) für die Aufnahme von Fliehkräften aufweist.

5. Abdeckung nach Anspruch 4, **dadurch gekennzeichnet, dass** ihr nabenartiger Bereich (3,4) mittels eines formsteifen Deckels (5,6) gegen Durchtritt versperrt ist.

## Claims

1. A covering (1, 2) for a component surface as protection against hot metal splatter during the machining of the component (9, 10) itself or of a neighbouring component with local generation of molten material, in particular during the rotary friction welding of gas turbine components, in order to avoid any metal contact between metal splatter and the component and the critical local supply of heat to the component, the thickness (D1, D2) of the covering being adapted to the energy content including the kinetic energy of the most energy-rich metal splatter expected and therefore not exceeding a defined minimum dimension at any point on the component surface to be protected,
**characterised in that**
a) the material for the covering (1, 2) is a rubber elastic plastic of sufficiently high temperature resistance which can be can be fixed to the component (9, 10) by adhesion/sticking and then detached from it again,
b) the surface geometry of the cover (1, 2) facing the component is exactly complementary to the geometry of the component surface (14, 15), and
c) the cover (1, 2) is designed as a reusable, inherently stable integral part.

2. A cover in accordance with claim 1,
**characterised in that**
it (1, 2) consists of a silicon rubber which releases practically no fluid components which might affect the component surface (14, 15).

3. A cover in accordance with claim 1 or 2,
**characterised in that**
its thickness (D1, D2) is at least approximately identical at each point on the component surface (14, 15) to be protected.

4. A cover in accordance with one of claims 1 to 3 for use in the manufacture of gas turbine rotors by means of rotary friction welding using disk-like components positioned coaxially behind one another with central openings,
**characterised in that**
it (1, 2) it has a root-like area (3, 4) which passes through the openings (12, 13) in the component (9, 10) forming a positive connection in order to absorb centrifugal forces.

5. A cover in accordance with claim 4,
**characterised in that**
its root-like area (3, 4) is sealed against spatter penetration by means of a dimensionally stable cover (5, 6).

## Revendications

1. Revêtement (1,2) pour une surface d'une pièce en guise de protection contre des projections chaudes de métal lors de l'usinage de la pièce (9, 10) elle-même ou d'une pièce adjacente avec la production locale d'une matière par fusion, en particulier lors de la soudure par rotation et friction de pièces de turbines à gaz, afin d'éviter un contact métallique entre des projections de métal et la pièce ainsi qu'une introduction localisée et critique de chaleur dans la pièce, moyennant quoi l'épaisseur (D1, D2) du revêtement est adaptée au pourcentage d'énergie, y compris à l'énergie cinétique, des projections de métal les plus riches en énergie à prévoir, et qu'elle ne dépasse de ce fait pas par le bas une mesure minimale prédéfinie en chaque emplacement de la surface de la pièce à protéger, **caractérisé en ce que**
a) la matière pour le revêtement (1, 2) est une matière synthétique élastique comme du caoutchouc pouvant être fixée sur la pièce (9, 10) par adhésion ou collage et pouvant à nouveau être détachée de celle-ci et avec une résistance à chaud suffisamment élevée,
b) la géométrie de la surface du revêtement (1, 2) faisant face à la pièce étant exactement complémentaire à la géométrie de la surface de la pièce (14, 15), et **en ce que**
c) le revêtement (1, 2) est réalisé en tant que pièce intégrale à stabilité de la forme pouvant être utilisée plusieurs fois.

2. Revêtement selon la revendication 1, **caractérisé en ce qu'**il (1, 2) se compose d'un caoutchouc à base de silicone, lequel ne libère pratiquement aucun élément constitutif fluidique influençant la surface de la pièce (14, 15).

3. Revêtement selon les revendications 1 ou 2, **caractérisé en ce que** son épaisseur (D1, D2) est au moins à peu près la même en chaque emplacement de la surface de la pièce (14, 15) à protéger.

4. Revêtement selon l'une quelconque des revendications 1 à 3, pour l'utilisation lors de la fabrication de rotors de turbines à gaz par soudure par rotation et friction en reliant des pièces semblables à des disques avec des ouvertures centrales et situées les unes derrière les autres de manière coaxiale, **caractérisé en ce qu'**il (1, 2) présente une zone (3, 4) semblable à un moyeu qui traverse les ouvertures (12, 13) de la pièce (9, 10) en formant un assemblage par conjugaison de formes pour la réception de forces centrifuges.

5. Revêtement selon la revendication 4, **caractérisé en ce que** sa zone semblable à un moyeu (3, 4) est fermée pour empêcher le passage à l'aide d'un couvercle indéformable (5, 6).
